Europäisches Patentamt

European Patent Office

Office européen des brevets

(11) Numéro de publication: **0 446 544 A2**

(12) **DEMANDE DE BREVET EUROPEEN**

(21) Numéro de dépôt: **90403482.4**

(22) Date de dépôt: **06.12.90**

(51) Int. Cl.⁵: **G01B 5/20**

(30) Priorité: **12.12.89 FR 8916415**

(43) Date de publication de la demande:
**18.09.91 Bulletin 91/38**

(84) Etats contractants désignés:
**AT BE CH DE DK ES GB GR IT LI LU NL SE**

(71) Demandeur: **FERCO INTERNATIONAL Usine de Ferrures de Bâtiment Société à responsabilité limitée**

**2, rue du Vieux-Moulin Reding
F-57400 Sarrebourg(FR)**

(72) Inventeur: **Kautt, Jean-Jacques
24 rue Pertois
F-67000 Strasbourg(FR)**

(74) Mandataire: **Rodhain, Claude et al
30, rue La Boétie
F-75008 Paris(FR)**

(54) Procédé et dispositif de reconnaissance de différents éléments de dimension standardisée, notamment de cadres de châssis de fenêtres en cours de fabrication.

㉗ Le dispositif conforme à l'invention de reconnaissance d'éléments de types différents, chaque type ayant une dimension prédéterminée comprend une butée (6) contre laquelle est positionné un côté de l'élément (1), un palpeur (3) comprenant une butée mobile (31) destinée à venir en contact avec l'autre côté de l'élément (1) et un détecteur (4) constitué d'un ensemble d'au moins un organe d'occultation (50) solidaire du palpeur (3) et d'un ensemble d'au moins un capteur (60) fixe.

De préférence le dispositif de reconnaissance est destiné à équiper une machine de travail de cadres de châssis de fenêtres ou porte-fenêtres afin de déterminer le type de châssis à traiter.

FIG. 2

# PROCÉDÉ ET DISPOSITIF DE RECONNAISSANCE DE DIFFÉRENTS ÉLÉMENTS DE DIMENSION STANDAR-DISÉE, NOTAMMENT DE CADRES DE CHÂSSIS DE FENÊTRES EN COURS DE FABRICATION".

La présente invention concerne un procédé et un dispositif de reconnaissance d'éléments de dimension standardisée.

Plus précisément, ce dispositif est destiné a équiper une machine de traitement de châssis de fenêtres ou de porte-fenêtres.

Le problème dans de telles machines est de repérer quel type de châssis est amené à la machine afin de commander les caractéristiques d'équipement correspondantes, chaque type ayant des caractéristiques de dimension standard. La solution est donc de déterminer grâce à un dispositif simple et fiable la dimension adéquate de l'élément et de transmettre cette information, éventuellement modifiée par un paramètre préenregistré, au dispositif de commande de la machine.

Ce dispositif plus particulièrement adapté à une machine d'équipement de châssis de fenêtres peut bien évidemment être utilisé dans toute application où il est nécessaire de repérer et reconnaître des éléments afin de les traiter en correspondance.

L'invention propose un dispositif de reconnaissance comportant un palpeur et un détecteur correspondant, l'association de ces deux éléments permettant par déduction logique de déterminer le type de l'élément repéré, et en particulier dans le cas d'une machine d'équipement de châssis, le type de vantail et le sens d'ouverture. Il aurait été possible de réaliser un palpeur pour chacun des éléments à repérer, mais cela aurait conduit à multiplier et compliquer les paramétrages informatiques. Grâce à l'invention, les mêmes effets sont obtenus par un nombre de combinaisons limité.

Pour ce faire la présente invention propose un procédé de reconnaissance d'éléments de type différent, chaque type ayant une dimension prédéterminée. Ce procédé est remarquable en ce qu'un ensemble d'au moins un organe d'occultation est déplacé et positionné en fonction de la dimension du type d'élément grâce à un dispositif de palpage, ce premier ensemble coopérant avec un ensemble d'au moins un capteur fixe, le ou les organes occultant selon plusieurs combinaisons le ou les capteurs, fournissant ainsi une information dépendante de la dimension repérée et spécifique au type d'élément présent.

Afin de réaliser l'agencement et les combinaisons les plus judicieuses possibles, le positionnement des organes d'occultation et des capteurs est défini en fonction du nombre et des dimensions des éléments à repérer.

Pour obtenir la commande souhaitée, l'information est modifiée par un paramètre préenregistré dépendant du type d'élément et de cette information modifiée résultent les paramètres de traitement de l'élément.

L'invention propose un dispositif de reconnaissance d'éléments de type différent, chaque type ayant une dimension prédéterminée ; ce dispositif comprend une butée contre laquelle est positionné un côté de l'élément, un palpeur mobile comprenant une butée mobile destinée à venir en contact avec l'autre côté de l'élément et un détecteur constitué d'un ensemble d'au moins un organe d'occultation solidaire du palpeur et d'un ensemble d'au moins un capteur fixe.

Selon un mode de réalisation préféré, le détecteur comprend un axe supporté en translation par des paliers fixes, cet axe supportant solidairement le ou les organe(s) d'occultation et étant solidaire du palpeur.

De préférence le détecteur comprend un second axe parallèle au premier, supporté par les mêmes paliers et destiné à la rigidification du mécanisme de détection.

L'application préférée de ce dispositif de reconnaissance est l'équipement d'une machine de travail de cadres de châssis de fenêtres ou porte-fenêtres, afin de déterminer le type de châssis à traiter ; selon cette application particulière, la butée est située à un angle de référence sur lequel est amené un côté du montant d'un cadre de battant grâce au dispositif d'amenage de la machine, le palpeur est commandé en translation par rapport au châssis fixe de la machine pour venir en contact avec l'autre côté du montant du cadre, le détecteur est supporté par une pièce de support solidaire du châssis de la machine.

L'invention est exposée ci-après plus en détail à l'aide de dessins représentant seulement un mode d'exécution.

- la figure 1 est une vue en coupe partielle et frontale du dispositif conforme à l'invention équipant une machine de traitement de châssis des battants de fenêtre ;
- la figure 2 est une vue en coupe selon AA du dispositif conforme à l'invention équipant une machine de traitement de châssis de battants de fenêtre;
- les figures 3A à 3F sont des vues schématiques de fonctionnement du dispositif en regard des différents types de montants de cadres de battants à repérer.

Les figures illustrent le dispositif de reconnaissance et le procédé de reconnaissance d'éléments de types différents, appliqués à la reconnaissance de montants de cadres de vantail de fenêtres ou porte-fenêtres. Le dispositif est donc mis en place sur une machine de traitement de cadres, par exemple une machine de pose de joint, une machine de pose de ferrures ou toute autre machine automatique d'équipement ou de traitement de cadres de vantail.

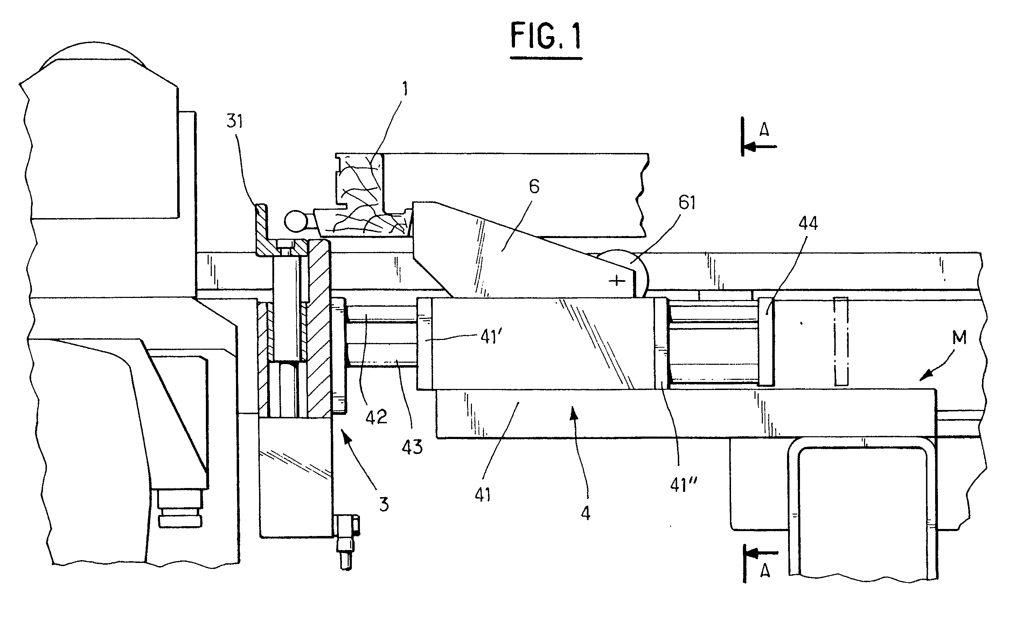

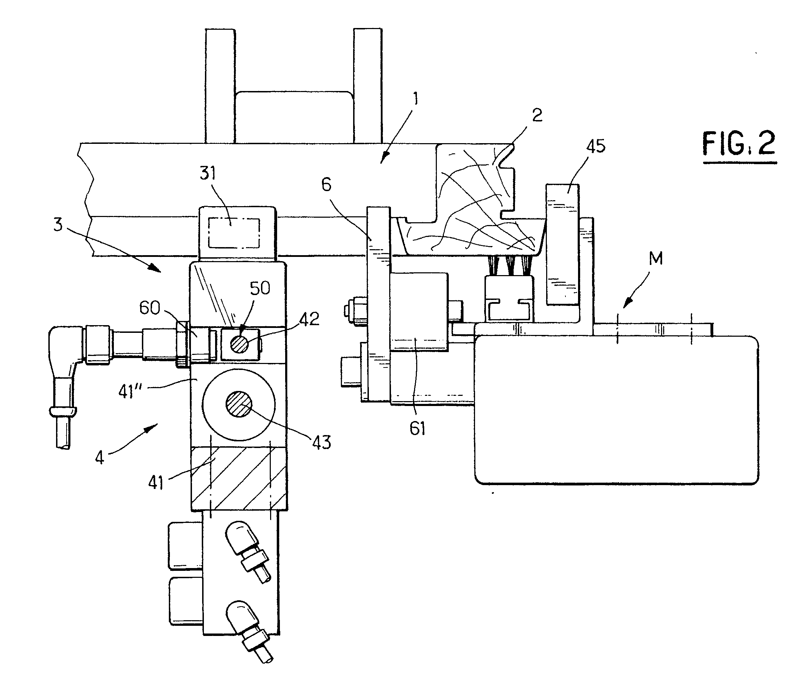

Les figures 1 et 2 représentent plus précisément le dispositif de reconnaissance conforme à l'invention.

Ce dispositif comporte une première butée 6 mobile par rapport au châssis M de la machine, contre laquelle est amené en contact le montant 1. De préférence le cadre de vantail est amené en butée sur une rive fixe 45 qui constitue un des organes du dispositif d'amenage ou d'alimentation des cadres sur la machine. Cette butée 6 détermine l'angle de référence du cadre et le bridage de celui-ci sur la table de la machine est complété par des éléments de maintien mis en place par exemple sur l'autre montant du cadre. La butée 6 est mobile autour d'un axe et pourvue d'une masselotte 61 qui la ramène dans sa position active saillante automatiquement une fois le cadre de vantail passé.

Selon le mode de réalisation représenté, comme on peut le voir sur ces figures 1 et 2 le cadre de vantail est disposé sur la table de la machine avec sa face intérieure posée sur la table et sa face extérieure dirigée vers le haut, en se référant à un vantail destiné à être ouvert vers l'intérieur. La traverse supérieure 2 jouxte, quant à elle, la rive 45.

Le dispositif de reconnaissance comporte également un palpeur 3 et un détecteur 4.

Le palpeur 3 est monté mobile sur la machine, grâce à un dispositif de translation par exemple par des rails ou équivalents et est de préférence entraîné par un dispositif de préférence pneumatique décrit ci-après. Faisant saillie du plan de la table de la machine, un élément de butée 31 est donc déplacé pour venir former un second contact de l'autre côté du montant 1. L'épaisseur de ce montant 1 est donc déterminée par la distance séparant la première butée 6 et la seconde butée mobile 31.

Le détecteur 4 qui est monté à proximité du palpeur 3 sur le châssis M de la machine comporte une partie mobile reliée en déplacement au palpeur 3 et une partie fixe solidaire du châssis de la machine.

Pour ce faire sont solidaires du palpeur 3 deux axes 42 et 43 qui coulissent en translation dans des paliers fixes 41' et 41" du détecteur. Ces arbres sont reliés en bout pour des raisons de rigidité par une plaquette ou équivalent 44.

La constitution du détecteur 4 est particulièrement visible sur la figure 2.

Le détecteur 4 est donc monté sur une pièce de support 41 solidaire du châssis M de la machine.

Le premier axe horizontal 42 supporte l'ensemble d'au moins un organe d'occultation 50, ce ou ces organes d'occultation 50 étant solidaires de l'axe 42. Le détecteur 4 comporte par ailleurs un ensemble d'au moins un capteur 60 monté fixe sur la partie fixe du détecteur 4.

L'axe 42 supporte les organes d'occultation 50 et l'axe 43 est l'axe moteur de la translation, sur lequel agit l'énergie pneumatique, cet axe étant agencé en un système de soupape à tiroir à l'intérieur du détecteur 4.

En conséquence le ou les organes d'occultation 50 sont déplacés et positionnés en fonction du déplacement et du positionnement de la butée mobile 31 et selon les dimensions du montant 1 viennent occulter ou non le faisceau lumineux, magnétique ou autre, du ou des capteurs 60.

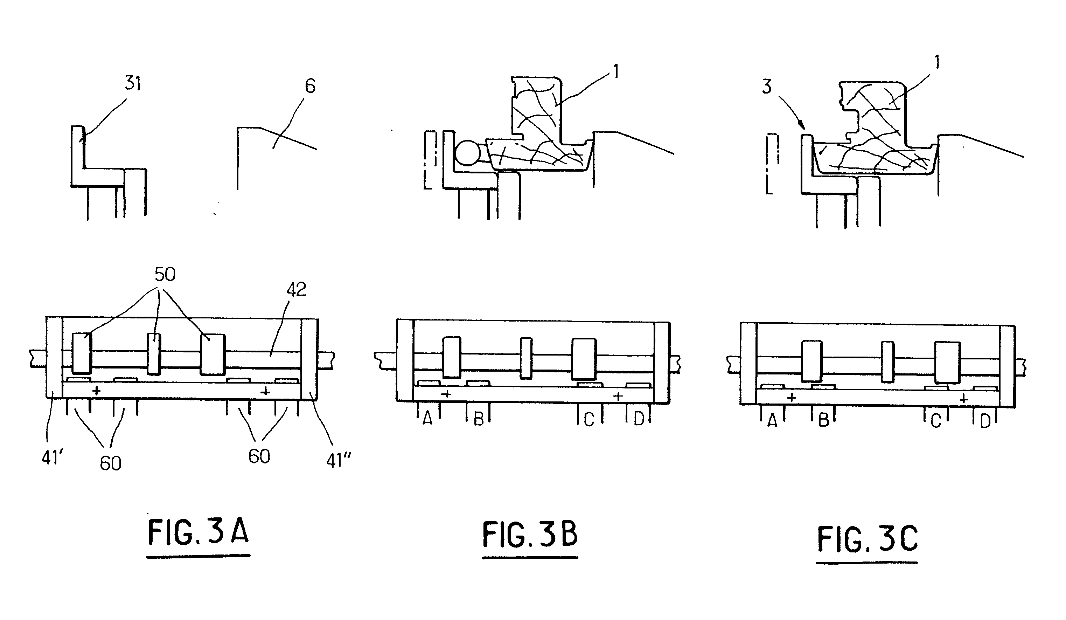

Le fonctionnement du dispositif de reconnaissance appliqué au repérage de cadres de vantail va maintenant être décrit plus précisément grâce aux figures 3A à 3F.

Le but du dispositif est de déterminer le type de vantail et son type d'ouverture. En d'autres termes, il s'agit de déterminer le type du vantail et de repérer s'il s'agit d'un cadre droit ou gauche selon le type afin de commander dans le cas d'une machine de pose de joint l'emplacement de mise en place du joint (sur 4 ou 3 côtés), dans le cas d'une machine de pose de ferrures l'emplacement et le type de ferrure à mettre en place...

Pour illustrer ce fonctionnement, les figures 3A à 3F représentent en vue schématique frontale la première butée 6 et la seconde butée mobile 31 du palpeur 3, en contact transversal avec un montant 1 de cadre de vantail et en vue schématique de dessus le détecteur 4 avec l'axe 42 avec les organes d'occultation 50 translatés sur les paliers 41' et 41" et les capteurs fixes 60.

La figure 3A illustre le positionnement d'ouverture maximum du palpeur 31 et les positions correspondantes des organes d'occultation 50.

Dans le cas de la figure 3B est repéré un montant à fiches, les fiches étant les éléments d'articulation du vantail sur le dormant. Dans ce cas de figure, seul le capteur C est occulté et le dispositif conforme à l'invention permet de repérer qu'il s'agit d'un vantail à ouverture à droite pour fenêtres ou porte-fenêtres à un ou deux vantaux, les cadres étant amenés sur la table de la machine de traitement dans la position déjà précisée.

Selon la figure 3C, les capteurs B et C sont occultés et cette disposition détermine pour un montant à crémone, un vantail à ouverture à gauche pour fenêtres ou porte-fenêtres à vantail unique.

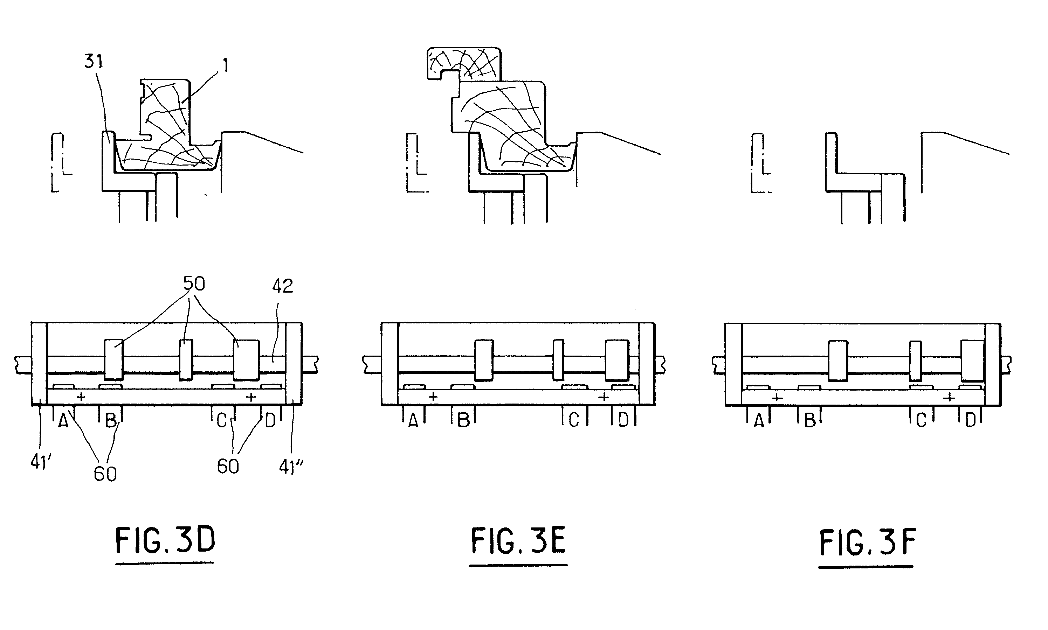

Selon la figure 3D seul le capteur B est occulté et, pour un montant d'un abattant, sa disposition détermine la présence d'un vantail basculant et permet de déterminer la traverse à équiper.

La figure 3E représente le cas où seul le capteur D est occulté et détermine pour un montant à battement la présence d'un vantail à ouverture à gauche d'un second vantail d'une fenêtre ou porte-fenêtre à double vantaux.

La figure 3F schématise la position de fin de course de la butée mobile et donc l'absence de vantail sur la table de la machine.

Selon l'agencement représenté, le détecteur comporte donc quatre capteurs inductifs 60 et trois organes d'occultation 50. Ainsi sont déterminables six paramètres correspondant aux figures 3A à 3F. Il est bien évident qu'en modifiant le nombre de capteurs et donc le nombre d'organes d'occultation l'on peut augmenter les différentes combinaisons obtenues et donc adapter le dispositif conforme à l'invention à un nombre inférieur ou supérieur de repérages.

L'association de capteurs inductifs 60 et d'organes d'occultation 50 permet donc d'obtenir des combinaisons où est définie la présence ou non des éléments métalliques que constituent les organes d'occultation en vis-à-vis avec les capteurs et de transmettre ces informations sous forme d'impulsions à l'automate de commande de la machine. Il suffit donc de modifier les paramètres préenregistrés pour adapter le procédé de dispositif de reconnaissance au repérage de type de montants de dimensions différentes.

Ce mode d'exécution n'est nullement limité par les conditions fixes de paramétrage du châssis telles que l'agencement de la face intérieure et de la traverse supérieure par rapport à la machine.

## Revendications

1. Procédé de reconnaissance d'éléments de type différent, chaque type ayant une dimension prédéterminée caractérisée en ce qu'un ensemble d'au moins un organe d'occultation est déplacé et positionné en fonction de la dimension du type d'élément grâce à un dispositif de palpage, ce premier ensemble coopérant avec un second ensemble d'au moins un capteur fixe, le ou les organes occultant selon plusieurs combinaisons le ou les capteurs, fournissant ainsi une information dépendante de la dimension repérée et spécifique au type d'élément présent.

2. Procédé selon la revendication 1, caractérisé en ce que le positionnement des organes d'occultation et des capteurs est défini en fonction du nombre et des dimensions des éléments à repérer.

3. Dispositif de reconnaissance d'éléments de type différent, chaque type ayant une dimension prédéterminée, pour la mise en oeuvre du procédé selon la revendication 1 ou 2, caractérisé en ce qu'il comprend une butée (6) contre laquelle est positionné un côté de l'élément (1), un palpeur (3) mobile comprenant une butée mobile (31) destinée à venir en e2contact avec l'autre côté de l'élément (1) et un détecteur (4) constitué d'un ensemble d'au moins un organe d'occultation (50) solidaire du palpeur (3) et d'un ensemble d'au moins un capteur (60) fixe.

4. Dispositif selon la revendication 3, caractérisé en ce que le détecteur (4) comprend un axe (42) supporté en translation par des paliers (41') et (41") fixes et qui supporte solidairement les organes d'occultation (50) et est solidaire du palpeur (3).

5. Dispositif selon la revendication 4, caractérisé en ce que le détecteur (4) comprend un second axe moteur (43) parallèle au premier (42) supporté par les mêmes paliers (41') et (41").

6. Dispositif de reconnaissance selon l'une quelconque des revendications 3 à 5, destiné à équiper une machine de travail de cadres de châssis de fenêtres ou porte-fenêtres afin de déterminer le type de châssis à traiter, caractérisé en ce que la butée (6) est située à un angle de référence sur lequel est amené un côté . du montant (1) d'un cadre de battant grâce au dispositif d'amenage de la machine, que le palpeur (3) est commandé en translation par rapport au châssis de la machine pour venir en contact avec l'autre côté du montant (1) du cadre, que le détecteur (4) est supporté par une pièce de support (41) solidaire du châssis de la machine.

7. Dispositif de reconnaissance selon la revendication 6, caractérisé en ce que la butée (6) est mobile par pivotement autour d'un axe horizontal, son retour automatique en position active étant assuré par une masselotte (6l).

FIG.1

FIG. 2

EP 0 446 544 A2

EP 0 446 544 A2

31

6

1

3

1

50

42

41'    60    60    41"

A    B    C    D

A    B    C    D

## FIG. 3A

## FIG. 3B

## FIG. 3C

FIG. 3D

FIG. 3E

FIG. 3F

EP 0 446 544 A2